# NEUE EUROPÄISCHE PATENTSCHRIFT

(11) **EP 1 675 905 B2**
(45) Veröffentlichungstag und Bekanntmachung des Hinweises auf die Entscheidung über den Einspruch: **04.06.2025**
(45) Hinweis auf die Patenterteilung: 21.02.2018
(21) Anmeldenummer: 04790719.1
(22) Anmeldetag: 21.10.2004
(51) Int. Cl.: C08L 23/08, B32B 27/32, B29C 49/00

(54) **VERFAHREN ZUR HERSTELLUNG VON ELEKTROSTATISCH NICHT AUFLADBAREN ODER/UND ELEKTRISCH ABLEITBAREN KUNSTSTOFF-BEHÄLTERN UND DANACH HERGESTELLTER KUNSTSTOFF-BEHÄLTER**
METHOD FOR PRODUCING ELECTROSTATICALLY NON-CHARGEABLE AND/OR ELECTRICALLY DERIVABLE PLASTIC CONTAINERS, AND PLASTIC CONTAINERS PRODUCED THEREBY
PROCEDE DE FABRICATION DE CONTENANTS EN PLASTIQUE NE POUVANT PAS ETRE CHARGES ELECTROSTATIQUEMENT NI DECHARGES ELECTRIQUEMENT ET CONTENANT EN PLASTIQUE AINSI FABRIQUE

(30) Priorität: 23.10.2003 DE 20316382 U
(43) Veröffentlichungstag der Anmeldung: 05.07.2006
(73) Patentinhaber: MAUSER-WERKE GmbH, D-50321 Brühl (DE)
(72) Erfinder: SCHUBBACH, Reinhard, 65527 Niedernhausen/Rheingau (DE); SCHMIDT, Klaus, Peter, 53123 Bonn (DE)
(74) Vertreter: Hoffmann Eitle
(86) Internationale Anmeldenummer: PCT/EP2004/011914
(87) Internationale Veröffentlichungsnummer: WO 2005/040269

(56) Entgegenhaltungen:
- EP-A1- 0 111 602
- EP-A1- 0 111 602
- EP-A2- 0 219 315
- WO-A1-03/029000
- DE-A1- 4 212 676
- DE-A1- 4 401 207
- DE-U1- 20 206 436
- DATABASE WPI Section Ch Week 200257, Derwent World Patents Index; Class A23, AN 2002-532595, XP002318753

## Beschreibung

Die Erfindung betrifft ein Blasformverfahren zur Herstellung eines mehrschichtigen quaderförmigen Behälters aus thermoplastischem Kunststoff zum Einsatz in einem Palettencontainer mit Bodenpalette und den Behälter umschließenden Gitterrahmen, zur Lagerung und zum Transport von flüssigen Füllgütern, insbesondere für brennbare oder explosionsgefährliche Füllgüter, wobei der Behälter mit einer dauerhaft elektrostatisch nicht aufladbaren bzw. elektrisch ableitbaren Außenschicht versehen ist.

### Stand der Technik:

Ein derartiger Palettencontainer mit Bodenpalette, Gitterrahmen und darin eingesetzter, im Blasformverfahren hergestellter Behälter aus thermoplastischem Kunststoff zur Lagerung und zum Transport von flüssigen Füllgütern, insbesondere für brennbare oder explosionsgefährliche Füllgüter, mit wenigstens einer im Behälteroberboden bzw. im Behälterdeckel angeordneten gas- und flüssigkeitsdicht verschließbaren Einfüll- oder/und Entleerungsöffnung, wobei der Behälter mit einer dauerhaft elektrostatisch nicht aufladbaren bzw. elektrostatisch ableitenden Außenschicht versehen ist, ist z. B. aus der DE 196 05 890 A1 bekannt. Beim Befüllen und Entleeren dieses bekannten Palettencontainers, beim Hin- und Herschwappen des flüssigen Füllgutes durch Transportbewegungen und beim Rühren von Flüssigkeiten in derartigen Kunststoff-Behältern z. B. zu Mischzwecken, werden durch Flüssigkeitsreibung an der Behälteroberfläche auftretende elektrische Ladungen über eine - dort so bezeichnete - dauerantistatische bzw. elektrisch ableitbare Außenbeschichtung des Innenbehälters und das metallische Untergestell (Stahlpalette) in den Boden abgeleitet.

Dabei besteht diese dauerantistatische Beschichtung aus einem Kunststoff mit einem Anteil an Leitruß (im allgemeinen Verständnis ist dies eine elektrisch ableitbare aber keine antistatische Beschichtung !). Elektrische Entladungen mit möglicher Funkenbildung zwischen dem Kunststoff - Innenbehälter und dem Metallgittermantel, die zu einer Entzündung von feuergefährlichen Füllgütern des Palettencontainers bzw. von explosionsfähigen Gemischen von Gasen und Dämpfen führen können, sollen somit ausgeschlossen sein.

Für eine Verwendung bzw. einen Einsatz von brennbaren oder explosionsgefährdeten Füllgütern sind Kunststoff-Behälter oftmals - zumindest in der äußeren Schicht - mit Leitruß schwarz eingefärbt, um eine elektrostatisch nicht aufladbare bzw. elektrostatisch ableitfähige Oberfläche zu erlangen.

Ganz allgemein ist es bei Kunststoff-Behältern mit eingefärbter Außenschicht wünschenswert, den jeweiligen Füll- bzw. Entleerungszustand des Behälters erkennen zu können. Üblicherweise werden derartige Kunststoff-Behälter mit einem schmalen vertikal verlaufenden Sichtstreifen versehen, durch den der jeweilige Füllstand des Füllgutes im Behälter erkennbar ist. Die Herstellung von Kunststoff-Behältern mit Sichtstreifen ist nach dem Blasformverfahren einigermaßen aufwendig und erfordert eine entsprechende maschinelle Ausstattung des Extrusionskopfes mit zusätzlichem Extruder für das Sichtstreifenmaterial.

Bezüglich eines elektrostatisch nicht aufladbaren bzw. elektrisch ableitbaren Kunststoffmateriales wird auf folgenden Stand der Technik verwiesen :
Aus der Druckschrift JP-A-2002 146212 ist ein antistatisches Compound bekannt, welches aus Polyetheramiden in Verbindung mit einer thermoplastischen Matrix besteht und z. B. für eine Anwendung bei Containern, Verpackungen und Gehäusen von elektronischen Schaltungen und Geräten vorgesehen ist.

In der Druckschrift EP-A-0 219 315 wird eine mehrschichtige Kunststofffolie für thermogeformte oder laminierte Behälter und Verpackungen wie Beutel oder Taschen mit einer inneren oder/und äußeren Schicht aus antistatischem Material beschrieben. Diese Verpackungsfolien weisen eine Dicke im Bereich von 0,0025 mm bis 0,076 mm auf, sind zur visuellen Inspektion des Verpackungsinhaltes transparent ausgebildet und sind für elektrostatisch sensitive Komponenten wie z. B. Elektronikbauteile oder medizinische Instrumente bzw. pharmazeutische Substanzen vorgesehen, die mittels der elektrostatisch nicht aufladbaren Verpackung vor Staub oder anderen Luftverunreinigungen geschützt sein müssen.

Weiterhin ist aus der Druckschrift EP-A-0 111 602 A eine zweischichtige Kunststofffolie zur Herstellung von Kunststoffbeuteln oder -säcken bekannt, die zur automatischen Verpackung bzw. Einfüllung von granulatförmigem Material wie z. B. Reis, Weizen oder Düngemitteln sowie eckigen festen Produkten wie Nahrungsmittel oder z. B. Geflügel, eine hohe mechanische Festigkeit aufweisen müssen. Die aus dem laminierten Kunststoffmaterial hergestellten Beutel oder Säcke weisen eine äußere Schicht aus LDPE (Low Density Polymer Ethylen) und eine innere Schicht aus einer Mixtur aus HDPE (High Density Poly Ethylen) mit einem Zusatz von Ethylen-α-Olefin Copolymer auf. Die Schichtdicke der äußeren LDPE-Schicht soll bei einer Gesamtschicktdicke der Kunststofffolie zwischen 10 bis 200 micron 60 % nicht übersteigen, da sonst die erforderliche Festigkeit nicht mehr gewährleistet ist. Eine bevorzugte Beutelgröße wird bei einer Gesamtdicke der Folie von 50 micron mit einer Breite von 340 mm und einer Höhe von 570 mm angegeben. Bei Bedarf können Additive wie Pigmente, Gleitmittel, Antioxidantien, antistatische Mittel und Wetterresistenz verbessernde Mittel in die innere oder/und die äußere Kunststoffschicht eingebettet sein.

Die Druckschrift WO 03/029000 A offenbart ebenfalls einen zweischichtigen Laminatfilm für Kunststoffverpackungen mit einer LDPE- und einer HDPE-Schicht. Die für die Verpackung von Lebensmittel oder medizinischen Instrumenten vorgesehene Kunststofffolie soll einerseits eine gute Heiß-Versiegelbarkeit aufweisen und andererseits ein leichtes Öffnen der Siegel-Verpackung zulassen. Die Gesamtdicke der Folie soll zwischen 30 und 50 µm betragen. Bei Bedarf können ebenfalls Additive wie Antioxidantien, Wetterresistenz verbessernde Mittel, antistatische Mittel, Gleitmittel, Inhibitoren, Farbe, Pigmente, Öl, Wachs oder Füllstoffe in eine oder beide Kunststoffschichten zugemischt sein.

Bei einem weiteren aus der DE-A-38 44 605 bekannten Palettencontainer ist mindestens ein Sichtstreifen aus durchscheinendem bzw. durchsichtigen Kunststoffmaterial bekannt, das mit dem schwarz eingefärbten Kunststoffmaterial (Einschichtmaterial durchgehend eingefärbt) eine Einheit bildet.
Aus der DE-A-41 36 766 ist weiterhin eine mehrschichtige Behälterwandung mit äußerer eingefärbter Behältermantelschicht mit streifenförmig ausgebildetem Schichtunterbrechungsbereich bekannt. Der streifenförmige Schichtunterbrechungsbereich ist stoffschlüssig mit dem eingefärbten Kunststoffmaterial der äußeren Behältermantelschicht verbunden.
Ein weiterer Palettencontainer mit mehrschichtigem Innenbehälter, mit rußgeschwärzter dauerantistatischer Außenschicht und mit mindestens einem integrierten Sichtstreifen aus durchsichtigem Kunststoffmaterial ist aus der DE 202 06 436 bekannt.

### Nachteile des Standes der Technik :

Ein Nachteil der bekannten Palettencontainer mit eingefärbter bzw. eingeschwärzter Außenschicht (Leitruß) besteht darin, dass aufgrund der äußeren Farbgebung des Kunststoff-Innenbehälters eine optische Füllstandskontrolle ohne Sichtstreifen nicht möglich ist. Die Zugabe von Russanteilen bewirkt zudem eine erhebliche Verminderung der mechanischen Festigkeit des Kunststoffmateriales, insbesondere ein Absenken der Bruchfestigkeit und Vermindern der Verschweissbarkeit.

Alle vorgenannten eingefärbten Kunststoffbehälter haben einen durchgehenden Sichtstreifen in der Behälterwandung, der aus dem farblosen Kunststoffmaterial der Innenschicht besteht. Dabei ist es verfahrenstechnisch sehr aufwendig, derartige Kunststoffbehälter herzustellen und es wird zumeist ein weiterer Extruder benötigt. Bei Verbindung von Sichtstreifen und daneben angeordneter Volumenskala muss die Umfangsposition des Schichtstreifens des Innenbehälters genau mit der Umfangsposition der Volumenskala abgestimmt werden. Zudem ist ein genauer vertikaler Verlauf des Sichtstreifens auf dem Innenbehälter bei der Fertigung des Innenbehälters, d. h. beim Aufblasen und Ausrecken des schlauchförmigen Vorformlings in einer quaderförmigen Blasform schwierig einzuhalten.

Es ist daher Aufgabe der vorliegenden Erfindung, ein entsprechendes Blasformverfahren und einen danach hergestellten Palettencontainer mit Kunststoff-Innenbehälter anzugeben, der die vorteilhaften Eigenschaften einer dauerhaft elektrostatisch nicht aufladbaren bzw. elektrisch ableitbaren Oberfläche aufweist, aber nicht mit den bisherigen Nachteilen (Schwarzfärbung) bekannter Kunststoff-Behälter belastet ist.

Die Lösung dieser Aufgabe wird für einen erfindungsgemäßen Palettencontainer mit den Merkmalen des Patentanspruches 1 und für ein entsprechendes Blasformverfahren für den Kunststoff-Innenbehälter mit den Merkmalen des Patentanspruches 7 beschrieben.
Der großvolumige Palettencontainer mit Kunststoff-Innenbehälter ist besonders geeignet, um gefährliche flüssige Füllgüter wie auch brennbare oder explosionsgefährliche Flüssigkeiten (Chemikalien) zu lagern und zu transportieren. Der quaderförmige Behälter wird im Blasformverfahren hergestellt; er besteht aus einer innenseitigen dickeren Trägerschicht aus HDPE-Kunststoffmaterial und einer dünneren äußeren Schicht aus LDPE mit eingemischtem Antistatik-Compound. Die mittlere Wanddicke des Behälters liegt bei ca. 2 mm.
Beim Blasformen des aus einer Extrusionsdüse ausgestoßenen schlauchförmigen Vorformlings in einer zweigeteilten Blasform besteht ein großes Problem darin, dass die dünne, auf die dickere HDPE-Trägerschicht aufgetragene LDPE-Schicht beim Recken des schlauchförmigen Vorformlings in die quaderförmige Behältergestalt insbesondere in den Eckbereichen, wo die höchsten Reckgrade auftreten, aufreißen kann und eine flächendeckende antistatische Beschichtung nicht mehr gewährleistet ist. Verfahrenstechnisch werden die dauerhaft elektrostatisch nicht aufladbaren bzw. elektrostatisch ableitenden Eigenschaften der Außenschicht durch Zugabe und Einmischen eines besonderen Compounds auf Polymerbasis in das farblose Kunststoffmaterial der Außenschicht in begrenzter Menge derart eingestellt und die Schichtdicke der Außenschicht wird derart dünn ausgebildet, daß die Durchsichtigkeit bzw.

Durchscheinbarkeit der compoundierten Außenschicht nicht oder nur so wenig beeinträchtigt wird, so daß die Füllstandshöhe einer in den Behälter eingefüllten Flüssigkeit ohne weiteres optisch erkennbar bleibt. Das besondere Compoundmaterial ist nahezu farblos oder besitzt nur eine ganz geringe einfärbende Eigenschaft.
Ein ganz wesentlicher Vorteil besteht also darin, daß die elektrisch ableitende bzw. dauerantistatische Außenschicht des Kunststoffbehälters mit compoundiertem Antistatikum-Masterbatch (Permastat-Material) weiterhin durchsichtig bzw. durchscheinend bleibt und das aufwendige Einarbeiten eines Sichtstreifens überflüssig macht.

Die "nicht aufladbare" bzw. "ableitende" Wirkung der dünnen Außenschicht wird hier durch einen leitfähigen transparenten copolymeren Thermoplasten erreicht. Es handelt sich hierbei um ein Polyamid-Polyamidetherblockamid Kunststoffmaterial, das seine Leitfähigkeit durch eine sogenannte "funktionelle Gruppe", nämlich das Polyetherblockamid erhält. Die Zugabemenge dieser Copolymere in das Basis-Kunststoffmaterial der Außenschicht liegt bei 10 % bis 20 %. Dabei werden Oberflächenwiderstände zwischen 10 hoch 12 bis zu 10 hoch 8 Ohm/sq erreicht, wodurch die Behälter nicht mehr aufladbar sind und an der Grenze zur Ableitfähigkeit liegen. Die nicht aufladbare Wirkung bleibt dabei ohne Beeinträchtigung auch bei sehr niedrigen Luftfeuchtigkeiten (z. B. ca. 10 % Luftfeuchte) erhalten. Die hierdurch erreichte antistatische Eigenschaft ist diejenige Fähigkeit des eingesetzten Materials, triboelektrische Aufladungen zu verhindern, wobei das leitfähige Thermoplast-Compound eine Mischung aus Basiskunststoffen und leitfähigen Additiven ist, die die natürlichen isolierenden Eigenschaften des Basismaterials überwinden.

Da beim Blasformverfahren, insbesondere bei großvolumigen eckigen Kunststoff-Behältern wie z. B. bei Innenbehältern von Palettencontainern, große Verstreckungsgrade in den Eckbereichen auftreten, kann es sein, daß dort die Schichtdicke der äußeren elektrostatisch nicht aufladbaren bzw. elektrostatisch ableitenden Kunststoffschicht zu dünn wird oder sogar aufreißt. Die Funktion des Behälters würde hierdurch negativ beeinträchtigt. Eine Beurteilung der Wirksamkeit der Außenschicht (elektrischer Oberflächenwiderstand, elektrische Ableitfähigkeit) am Bauteil mittels üblicher Meßmethoden, wie z.B. mittels Stab- oder Ringelektroden, ist auf Grund der im Blasformverfahren häufig gegebenen gewölbten Freiformflächen nicht möglich oder zumindest nur mit hohem Aufwand umzusetzen.
In Ausgestaltung der Erfindung ist daher vorgesehen, daß eine begrenzte Menge von Farbpigmenten in das Kunststoffmaterial der Außenschicht zugegeben und eingemischt wird, die eine leichte Einfärbung des Kunststoffmaterials der Außenschicht bewirkt, wodurch die flächige Verteilung der dünnen Außenschicht und ihre Schichtdickenverteilung visuell sichtbar gemacht und durch Inaugenscheinnahme optisch einfach beurteilt werden kann, wobei aber nach wie vor die Durchsichtigkeit bzw. Durchscheinbarkeit der compoundierten Außenschicht nicht oder nur so wenig beeinträchtigt wird, daß die Füllstandshöhe einer eingefüllten Flüssigkeit ohne weiteres optisch gut erkennbar bleibt.

In einer anderen Ausgestaltung der Erfindung ist alternativ vorgesehen, daß eine begrenzte Menge von optischen Aufhellern (chemischer Zusatzstoff) in das Kunststoffmaterial der Außenschicht zugegeben und eingemischt wird, die unter Normalbedingungen nahezu keine Einfärbung, sondern lediglich einen leichten optischen Blaustich des Kunststoffmaterials der Außenschicht bewirkt. Bei Betrachtung mit Hilfe spezieller Beleuchtungsmethoden, wie etwa einem Bestrahlen mit Schwarzlicht, wird wiederum die flächige Verteilung der dünnen Außenschicht und ihre Schichtdickenverteilung visuell sichtbar gemacht und kann optisch genau beurteilt werden.

In einer bevorzugten Ausgestaltung der vorliegenden Erfindung wird als Kunststoffmaterial für die Außenschicht ein leicht fließendes, leicht ausreckbares Polymer, wie z. B. LLDPE-Material (Linear Low Density PolyEthylen) oder LDPE-Material (Low Density PolyEthylen) und für die mittlere(n) Schicht(en) oder/und für die innere(n) Schicht(en) des mehrschichtigen Behälters ein hochmolekulares, schwerfließendes, schwer verstreckbares, kälteschlagzähes HDPE-Material (High Density PolyEthylen) eingesetzt, in welches das Antistatikum-Masterbatch (Permastat-Material) eingemischt ist.
Das LLDPE-Material bzw. das LDPE-Material ist bei gleicher Temperatur besser verstreckbar als das HDPE-Material und es werden beim Einsatz dieses Materials bei der Blasformgebung in den Bereichen hoher Verstreckung, z. B. in den Eckbereichen eines Kunststoff-Innenbehälters für einen Palettencontainer bessere Flächenverteilungen und gleichmäßigere Schichtdicken erzielt. Die Unteransprüche beinhalten zweckmäßige Weiterbildungen der Erfindung.

Der erfindungsgemäße Kunststoffbehälter zeichnet sich durch folgende Vorteile aus :
- der Behälter ist in der Außenschicht dauerhaft nicht elektrostatisch aufladbar bzw. elektrostatisch ableitend,
- die gleichmäßige Verteilung der Außenschicht und ihre Schichtdicke ist optisch erkennbar bzw. visuell beurteilbar,
- die Füllstandshöhe des flüssigen Füllgutes im Kunststoffbehälter kann zu jeder Zeit und aus jedem Blickwinkel problemlos optisch festgestellt werden,
- eine Volumenskala zur Anzeige der Füllstandshöhe kann an beliebiger, d. h. geeigneter Stelle angebracht werden.

Beschreibung : Der erfindungsgemäße Kunststoffbehälter wird nachstehend am Beispiel eines Palettenbehälters näher erläutert und beschrieben. Der als Mehrwegbehälter einsetzbare Palettencontainer weist einen austauschbaren, quaderförmigen Innenbehälter aus im wesentlichen High Density Polyethylen (HDPE) mit einer Stirnwand, einer Rückwand und zwei Seitenwänden, einem unteren als Ablaufboden ausgebildeten Boden, einem Oberboden mit einer durch einen Schraubdeckel verschließbaren Einfüllöffnung sowie einem Auslaufstutzen im unteren Abschnitt der vorderen Seitenwandung mit einer Auslaufarmatur auf.
Der Kunststoff-Innenbehälter steht auf einer Bodenpalette, die von allen vier Seiten von einem Gabelstapler aufgenommen werden kann. Der dünnwandige Kunststoff-Innenbehälter ist außenseitig von einem Gitterrahmen (Stützmantel) aus sich kreuzenden senkrechten und waagrechten Gitterstäben aus Metall umschlossen, welcher mit der Bodenpalette verbunden ist.
Der aus einem im wesentlichen aus einem Polyethylen hoher Dichte (HDPE) durch Extrusionsblasformen hergestellte Kunststoff-Innenbehälter besteht aus einer vergleichsweise dicken Mittelschicht, einer vorzugsweise dünnen Innenschicht sowie einer sehr dünnen dauerhaft elektrostatisch nicht aufladbaren bzw. elektrisch ableitenden Außenschicht.
Die Dicke der Mittelschicht beträgt ca. 1 mm bis 2 mm, vorzugsweise etwa 1,5 mm, und die Stärke der Innenschicht ca. 0,5 mm und die Stärke der Außenschicht zwischen 0,05 mm bis 0,5 mm, vorzugsweise ca. 0,2 mm. Für die Mittelschicht wird ein recyceltes Polyethylen-Granulat oder Mahlgut (HDPE-Recyclat) verwendet, für die Innenschicht dient ein neuwertiges Polyethylen-Granulat hoher Dichte (farbloses bzw. naturfarbenes HD-PE). Für die Außenschicht wird vorzugsweise ein Linear Low Density Polyethylen (LLDPE) bzw. ein Low Density Polyethylen (LDPE) mit compoundiertem Antistatik-Material (eingebundenes Permastat-Masterbatch, das z. B. eine Mischung aus künstlicher Kieselsäure und Aluminiumoxid enthalten kann) verwendet.
Mit diesem besonderen LDPE-Material läßt sich eine bessere Verstreckbarkeit der dünnen Außenschicht erreichen, insbesondere in den Eckbereichen von großvolumigen Behältern mit hohen Verstreckungsgraden wie z. B. bei Innenbehältern von Palettencontainern. Die nicht aufladbare Wirkung der dünnen Außenschicht wird erreicht, indem man das Copolymer als "räumliches Netz" in das Basis-Kunststoffmaterial einbaut. Das Aufbauen bzw. Einbauen des Copolymernetz erfolgt durch eine intensive Scherwirkung im Extruder, wobei die ursprünglich kugelförmigen Copolymere zu länglichen Plättchen verstreckt werden. Je besser diese Verstreckung ist, desto besser ist die Leitfähigkeit des Basis-Kunststoffmaterials. Die Verarbeitungstemperaturen im Extruder liegen bei vorzugsweise ca. 200° C.
Zur Herstellung von erfindungsgemäßen Kunststoffbehältern mit dem Ziel eines leichten Blauschimmers aber nach wie vor transparenter Behälterwandung wurde zum einen ein Permastat-Compound auf der Basis von LLDPE (Handelsbezeichnung Clearflex) mit 0,2 % UV-Absorber (Handelsbezeichnung Chimasorb) mit wenigen organischen Blaupigmenten verwendet, das als fertig gemischtes Compound in den Deckschicht-Extruder eingefahren wurde. Für die Ausführung mit optischem Aufheller zur Beurteilung der Deckschicht mittels Schwarzlichtbestrahlung wurde als Trägermaterial ein Lupolen-Kunststoff mit 20 % Zugabe von Leitfähigkeitscompound (Irgastat) und 0,2 % optischem Aufheller (Uvitex) in den Deckschicht-Extruder gefahren. Die Schichtdicke der ableitbaren Außenschicht wurde dabei im fertigen Behälter auf 0,2 mm eingestellt. Hierdurch wird gewährleistet, daß ein einfacher und sicherer Nachweis einer ungestörten und flächendeckenden Schichtverteilung ermöglicht ist.

Bei der vorliegenden Erfindung wird der mehrschichtige, vorzugsweise aus drei Schichten bestehende Kunststoffbehälter aus einem schlauchförmigen Vorformling in einer Blasform zum fertigen Behälter aufgeblasen. Der schlauchförmigen Vorformling wird in einem kontinuierlich arbeitenden Extrusionskopf oder diskontinuierlich arbeitendem Speicherkopf mit drei angeschlossenen Extrudern (ein Extruder für die hochreine Innenschicht, ein Extruder für die Mittelschcht aus sauberem Regranulat und ein Extruder für die dünne antistatische Außenschicht) erzeugt, wobei die drei Schichten im Extrusionskopf homogen miteinander verbunden werden und z. B. für einen 1000 Liter Innenbehälter eines Palettencontainers als Schlauch-Zwischenprodukt mit einer Wanddicke von ca. 35 mm und einem Außendurchmesser von ca. 300 mm aus einer entsprechenden Ringdüse des Extrusionskopfes ausgestoßen und mittels Druckluft in der Blasform zum fertigen Kunststoffbehälter mit einer mittleren Wanddicke von ca. 2,5 mm aufgeblasen werden.
Im Gegensatz zu bekannten Verfahren, bei denen z. B. erhitzte ionisierte Metallpartikel auf die Oberfläche des Kunsststoffbehälters aufgeblasen und in die Oberfläche des Kunstoffmateriales eingeschmolzen werden, oder bei dem eine elektrisch leitende Lackschicht mit elektrisch leitfähigen Polymeren vorzugsweise nachträglich auf den Kunststoffbehälter aufgetragen werden, wird also bei dem erfindungsgemäßen Verfahren im Extrusionskopf zunächst ein schlauchförmiger Vorformling aus drei homogen im Schmelzezustand miteinander verbundenen Polyethylenschichten erzeugt, bei dem die Außenschicht durch homogenes Einmischen eines Antistatik-Compounds im Extruder (bei ca. 200° C Arbeitstemperatur) durchgehend antistatische Eigenschaften aufweist, die insbesondere dauerhaft und völlig unempfindlich gegen Abrieb und mechanische Beanspruchung ist. Insbesondere äußerlich aufgetragene Lacke können nämlich wie die Praxis gezeigt hat, durch Transportbewegungen (Scheuern des Gitterrahmens auf der Behälteroberfläche) abgerieben und aufgrund von unterschiedlichen Materialeigenschaften durch Witterungseinflüsse (Nässe, Frost, UV-Beanspruchung) abgelöst werden und großflächig abplatzen bzw. abblättern.

Die Erfindung wird nachfolgend anhand von in den Zeichnungen schematisch dargestellten Ausführungsbeispielen näher erläutert und beschrieben. Es zeigen :
- Figur 1: einen erfindungsgemäßen Palettenbehälter,
- Figur 2: einen Antistatik-Kunststoff-Innenbehälter mit Füllstandsskala,
- Figur 3: einen Ausschnitt einer mehrschichtigen Behälterwandung,
- Figur 4: einen Antistatik - Kunststoffbehälter in Spundfaßausführung und
- Figur 5: einen Antistatik - Kunststoffbehälter in Kanisterausführung

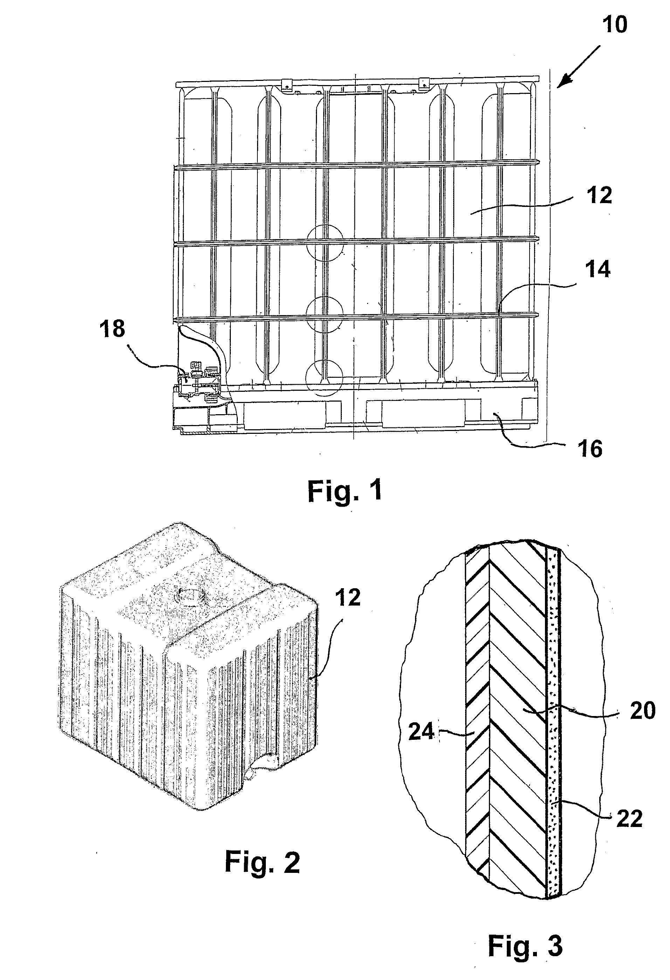

Figur 1 zeigt einen Palettencontainer 10 insbesondere für brennbare oder explosionsgefährdete Flüssigkeiten, mit einer Bodenpalette 16, einem dünnwandigen, quaderförmigen Innenbehälter 12 aus Kunststoff mit einem oberen verschließbaren Einfüllstutzen und einem unteren Auslaufstutzen mit einer Entnahmearmatur 18 sowie einem den Innenbehälter 12 umgebenden Gitterrahmen 14 (Stützmantel), der aus senkrechten und waagrechten Metall-Gitterstäben besteht, wobei der Innenbehälter 12 mit einer dauerantistatischen Außenschicht aus durchsichtigem bzw. durchscheinendem Kunststoffmaterial ausgestattet ist und eine auf der Außenseite angebrachte Füllstandsanzeigeskala aufweist. Der Kunststoff-Innenbehälter 12 ist als Mehrschichtbehälter ausgebildet und nach dem Extrusionsblasformverfahren hergestellt. Der Kunststoff-Innenbehälter 12 weist - wie in Figur 3 dargestellt ist - eine Mittelschicht 20, eine dauerantistatische Außenschicht 22 sowie eine Innenschicht 24 auf.
Der Kunststoff-Innenbehälter kann in anderer Ausführung mit einer Mittelschicht sowie einer dauerantistatischen Außen- und Innenschicht versehen sein. Zweckmäßigerweise ist der Kunststoff-Innenbehälter 12 mit einer Auslaufarmatur 18 ausgestattet, die als Spritzgußteil ebenfalls aus antistatischem bzw. elektrisch ableitendem Kunststoff besteht.
Ein Palettencontainer dieser Bauart ist für Ex1-Bereiche geeignet und erfüllt die neue Transportverordnung(2003) für Füllgüter der Gefahrenklasse 3 mit einem Flammpunkt unter 61° C.

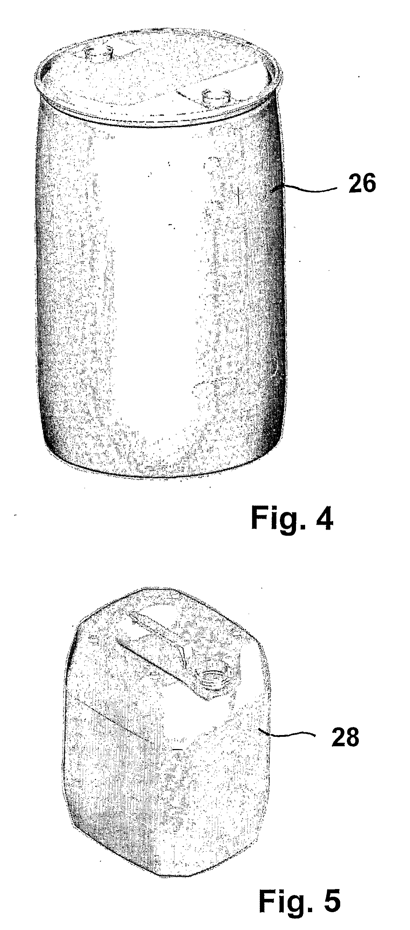

Die Figuren 4 und 5 zeigen beispielhaft weitere Ausführungsformen von "Antistatik" Kunststoffbehältern gemäß der vorliegenden Erfindung in Gestalt eines Kunststoff-Spundfasses 26 und eines Kunststoff-Kanisters 28.

## Patentansprüche

1. Palettencontainer mit Bodenpalette, Gitterrahmen und darin eingesetzter, im Blasformverfahren hergestellter Behälter aus thermoplastischem Kunststoff zur Lagerung und zum Transport von flüssigen Füllgütern, insbesondere für brennbare oder explosionsgefährliche Füllgüter, mit wenigstens einer im Behälteroberboden bzw. im Behälterdeckel angeordneten gas- und flüssigkeitsdicht verschließbaren Einfüll- oder/und Entleerungsöffnung, wobei der Behälter mit einer dauerhaft elektrostatisch nicht aufladbaren bzw. elektrostatisch ableitenden Außenschicht versehen ist, **dadurch gekennzeichnet, daß** die dauerhaft elektrostatisch nicht aufladbare bzw. elektrostatisch ableitende Außenschicht ein eingemischtes Antistatik-Compound als Polyamid-Polyamidetherblockamid Kunststoffmaterial mit einer Zugabemenge von 10 % bis 20 % in dem Basis-Kunststoffmaterial der Außenschicht enthält und die Schichtdicke der Außenschicht mit einer Stärke zwischen 0,05 mm und 0,5 mm derart dünn ausgebildet ist, daß die Durchsichtigkeit bzw. Durchscheinbarkeit der compoundierten Außenschicht nicht oder nur so wenig beeinträchtigt ist, daß die Füllstandshöhe einer in den Behälter eingefüllten Flüssigkeit ohne weiteres optisch erkennbar bleibt, wobei das Kunststoffmaterial der dünnen Außenschicht aus einem gut ausreckbaren thermoplastischen Material (Polymer), wie LLDPE-Material (Linear Low Density PolyEthylen) oder LDPE-Material (Low Density PolyEthylen) und das Kunststoffmaterial für die mittlere(n) Schicht(en) oder/und für die innere(n) Schicht(en) des mehrschichtigen Behälters aus einem hochmolekularen, kälteschlagzähen HDPE-Material (High Density PolyEthylen) besteht und die Dicke der Mittelschicht 1 mm bis 2 mm und die Stärke der Innenschicht 0,5 mm beträgt.

2. Palettencontainer nach Anspruch 1, **dadurch gekennzeichnet, daß** das Kunststoffmaterial der antistatischen Außenschicht eine begrenzte Menge von Farbpigmenten enthält, die eine leichte Einfärbung des Kunststoffmaterials der Außenschicht bewirken, wodurch die flächige Verteilung der dünnen Außenschicht und ihre Schichtdickenverteilung visuell sichtbar gemacht ist.

3. Palettencontainer nach Anspruch 1 oder 2, **dadurch gekennzeichnet, daß** das Kunststoffmaterial der antistatischen Außenschicht eine begrenzte Menge von optischen Aufhellern enthält, die eine unter Normalbedingungen kaum erkennbare Einfärbung des Kunststoffmaterials der Außenschicht bewirken, wobei jedoch unter einer speziellen Beleuchtung, wie z. B. Schwarzlicht, die flächige Verteilung der dünnen Außenschicht und ihre Schichtdickenverteilung visuell sichtbar gemacht werden kann.

4. Palettencontainer nach Anspruch 1, 2 oder 3, **dadurch gekennzeichnet, daß** die antistatische Außenschicht eine Schichtdicke von 0,25 % bis 5 %, vorzugsweise ca. 2 %, der Wandstärke des Kunststoffbehälters aufweist.

5. Palettencontainer nach Anspruch 1, 2, 3 oder 4, **dadurch gekennzeichnet, daß** die antistatische Außenschicht bei einem großvolumigen Kunststoff-Innenbehälter eines Palettencontainers mit einem Fassungsvermögen von ca. 1000 Litern eine Schichtdicke zwischen 0,05 mm bis 0,2 mm, vorzugsweise ca. 0,1 mm, aufweist.

6. Palettencontainer nach Anspruch 1, 2, 3, 4 oder 5, **gekennzeichnet durch** eine Ausbildung als dünnwandiger quaderförmiger Innenbehälter (12) eines Palettencontainers (10) mit einem Einfüllstutzen im Oberboden und einem unteren seitlichen Auslaufstutzen, auf dem eine aus dauerhaft antistatischen bzw. elektrisch ableitenden Kunststoff bestehende Entnahmearmatur (18) befestigt ist.

7. Blasformverfahren zur Herstellung eines mehrschichtigen quaderförmigen Behälters aus thermoplastischem Kunststoff zum Einsatz in Palettencontainer mit Bodenpalette und den Behälter umschließenden Gitterrahmen, zur Lagerung und zum Transport von flüssigen Füllgütern, insbesondere für brennbare oder explosionsgefährliche Füllgüter, wobei der Behälter mit einer dauerhaft elektrostatisch nicht aufladbaren bzw. elektrisch ableitbaren Außenschicht versehen ist, **dadurch gekennzeichnet, daß** die dauerhaft elektrostatisch nicht aufladbaren bzw. elektrostatisch ableitenden Eigenschaften der Außenschicht durch Zugabe und Einmischen eines Antistatik-Compounds auf Polymerbasis als Polyamid-Polyamidetherblockamid Kunststoffmaterial mit einer Zugabemenge von 10 % bis 20 % in das Basis-Kunststoffmaterial der Außenschicht in begrenzter Menge derart eingestellt und die Schichtdicke der Außenschicht derart dünn zwischen 0,05 mm und 0,5 mm ausgebildet wird, daß die Durchsichtigkeit bzw. Durchscheinbarkeit der compoundierten Außenschicht nicht oder nur so wenig beeinträchtigt wird, daß die Füllstandshöhe einer in den Behälter eingefüllten Flüssigkeit ohne weiteres optisch erkennbar bleibt, wobei für die dünne Außenschicht ein gut ausreckbares thermoplastisches Material (Polymer), wie LLDPE-Material (Linear Low Density PolyEthylen) oder LDPE-Material (Low Density PolyEthylen) und für die mittlere(n) Schicht(en) oder/und für die innere(n) Schicht(en) des mehrschichtigen Behälters ein hochmolekulares, kälteschlagzähes HDPE-Material (High Density PolyEthylen) verwendet wird und die Dicke der Mittelschicht 1 mm bis 2 mm und die Stärke der Innenschicht 0,5 mm beträgt.

8. Blasformverfahren nach Anspruch 7, **dadurch gekennzeichnet, daß** eine begrenzte Menge von Farbpigmenten in das Kunststoffmaterial der Außenschicht zugegeben und eingemischt wird, die eine leichte Einfärbung des Kunststoffmaterials der Außenschicht bewirkt, wodurch die flächige Verteilung der dünnen Außenschicht und ihre Schichtdickenverteilung visuell sichtbar gemacht und beurteilt werden kann, wobei jedoch die Durchscheinbarkeit der compoundierten und schwach farbpigmentierten Außenschicht nur so wenig beeinträchtigt wird, daß die Füllstandshöhe einer in den Behälter eingefüllten Flüssigkeit optisch noch gut erkennbar bleibt.

9. Blasformverfahren nach Anspruch 7 oder 8, **dadurch gekennzeichnet, daß** eine begrenzte Menge von optischen Aufhellern in das Kunststoffmaterial der Außenschicht zugegeben und eingemischt wird, die eine unter Normalbedingungen kaum erkennbare Einfärbung des Kunststoffmaterials der Außenschicht bewirkt, wobei jedoch unter einer speziellen Beleuchtung, wie z. B. durch Anstrahlung mit Schwarzlicht, die flächige Verteilung der dünnen Außenschicht und ihre Schichtdickenverteilung visuell sichtbar gemacht und beurteilt werden kann.

10. Blasformverfahren nach Anspruch 7, 8 oder 9, **dadurch gekennzeichnet, daß** die Außenschicht des Kunststoffbehälters auf eine Schichtdicke von 0,25 % bis 5 %, vorzugsweise ca. 2,0 %, der Wandstärke des Kunststoffbehälters eingestellt wird.

11. Blasformverfahren nach Anspruch 7, 8, 9 oder 10, **dadurch gekennzeichnet, daß** die Außenschicht bei einem großvolumigen Kunststoff-Innenbehälter eines Palettencontainers mit einem Fassungsvermögen von ca. 1000 Litern bei einer mittleren Wandstärke von 2 mm bis 2,5 mm auf eine Schichtdicke von 0,05 mm bis 0,2 mm, vorzugsweise ca. 0,1 mm, eingestellt wird.

## Claims

1. Pallet container with a bottom pallet, a lattice frame and, inserted therein, a container produced by blow moulding and made of thermoplastic, for the storage and transport of liquid contents, in particular for contents which are combustible or which pose an explosion risk, with, arranged in the top surface of the container or, respectively, in the lid of the container, at least one gas-tight and liquid-tight closable filling and/or emptying aperture, where the container is provided with a durably non-electrostatically-chargeable or, respectively, electrostatically dissipative exterior layer, **characterized in that** the durably non-electrostatically-chargeable or, respectively, electrostatically dissipative exterior layer comprises a mixed-in antistatic compound as a polyamide-polyamide ether block amide plastic material with an added quantity of 10% to 20% in the base plastic material of the exterior layer, and the exterior layer is designed to be so thin with a thickness of between 0.05 mm and 0.5 mm, so that the transparency or, respectively, translucency of the compounded exterior layer is not or only slightly impaired so that the fill level of a liquid filled into the container remains readily optically recognizable, where the plastic material of the thin exterior layer is made of a thermoplastic material (polymer) with good stretchability, for example LLDPE material (Linear Low Density Polyethylene) or LDPE material (Low Density Polyethylene), and the plastic material for the middle layer(s) and/or for the inner layer(s) of the multilayer container consists of a high-molecular-weight low-temperature-impact-resistant HDPE material (High Density Polyethylene) and the thickness of the middle layer is 1 mm to 2 mm and the thickness of the inner layer is 0.5 mm.

2. Pallet container according to Claim 1, **characterized in that** the plastic material of the antistatic exterior layer comprises a restricted amount of colour pigments which give the plastic material of the exterior layer a slight colouring, so that the area of distribution of the thin exterior layer and the distribution of its thickness are rendered visible.

3. Pallet container according to Claim 1 or 2, **characterized in that** the plastic material of the antistatic exterior layer comprises a restricted amount of optical brighteners, which give the plastic material of the exterior layer a colouring that is difficult to discern under normal conditions, while, however, the area of distribution of the thin exterior layer and the distribution of its thickness can be rendered visible under specific lighting, e. g. black light.

4. Pallet container according to Claim 1, 2 or 3, **characterized in that** the thickness of the antistatic exterior layer is from 0. 25% to 5%, preferably about 2%, of the wall thickness of the plastic container.

5. Pallet container according to claim 1, 2, 3 or 4, **characterized in that** the thickness of the antistatic exterior layer of a large-volume plastic inner container of a pallet container with a capacity of approximately 1000 liters is 0.05 mm to 0.2 mm, preferably approximately 0.1 mm.

6. Pallet container according to Claim 1, 2, 3, 4 or 5, **characterized by** a design in the form of thin-walled cuboid internal container (12) of a pallet container (10) with a filling neck in the upper side of the base and with, in the lower part of the side, an outlet neck on which a discharge fitting (18) consisting of durably antistatic or electrically dissipative plastic has been fixed.

7. Blow-moulding process for the production of a multilayer cuboid container composed of thermoplastic for use in a pallet container with a bottom pallet and a lattice frame enclosing the container, for the storage and transport of liquid contents, in particular for combustible or explosive contents, where the container is provided with a durably non-electrostatically-chargeable or, respectively, electrically dissipative external layer, **characterized in that** the durably non-electrostatically-chargeable or, respectively, electrostatically dissipative properties of the exterior layer are determined by adding and mixing an antistatic polymer-based compound as a polyamide-polyamide ether block amide plastic material with an added quantity of 10% to 20% in the base plastic material of the exterior layer and the layer thickness of the exterior layer is designed to be so thin with a thickness of between 0.05 mm and 0.5 mm, so that the transparency or, respectively, translucency of the compounded exterior layer is not or only slightly impaired so that the fill level of a liquid filled into the container remains readily optically recognizable, wherein a thermoplastic material (polymer) with good stretchability is used for the thin external layer, e.g. LLDPE material (Linear Low Density PolyEthylene) or LDPE material (Low Density PolyEthylene), and the plastic material for the middle layer(s) and/or for the inner layer(s) of the multilayer container consists of a high-molecular-weight low-temperature impact-resistant HDPE material (High Density PolyEthylene) and the thickness of the middle layer is 1 mm to 2mm and the thickness of the inner layer is 0.5mm.

8. Blow-moulding process according to Claim 7, **characterized in that** a restricted amount of colour pigments is added and incorporated by mixing into the plastic material of the exterior layer and gives the plastic material of the exterior layer a slight colouring, so that the area of distribution of the thin exterior layer and the distribution of its thickness can be rendered visible and assessed, while, however, the extent of impairment of the translucency of the compounded and slightly colour-pigmented exterior layer is sufficiently small that the fill level of a liquid filled into the container can still easily be optically recognized.

9. Blow-moulding process according to Claim 7 or 8, **characterized in that** a restricted amount of optical brighteners is added and incorporated by mixing into the plastic material of the exterior layer, and gives the plastic material of the exterior layer a colouring which is difficult to discern under normal conditions, while, however, the area of distribution of the thin exterior layer and the distribution of its thickness can be rendered visible and assessed under specific lighting, e. g. via irradiation with black light.

10. Blow-moulding process according to Claim 7, 8 or 9, **characterized in that** the thickness of the exterior layer of the plastic container is adjusted from 0.25% to 5%, preferably to about 2.0%, of the thickness of the plastic container.

11. Blow-moulding process according to claim 7, 8, 9 or 10, **characterized in that** the thickness of the exterior layer of a plastic inner container of a large pallet container with a capacity of approximately 1000 liters with an average wall thickness of between 2 mm and 2.5 mm is set at 0.05 mm to 0.2 mm, preferably approximately 0.1 mm.

## Revendications

1. Conteneur sur palette doté d'une palette de fond et d'une grille d'encadrement dans laquelle un récipient en matière synthétique thermoplastique fabriqué par une opération de moulage-soufflage est prévu pour entreposer et transporter des marchandises liquides, en particulier des marchandises combustibles et explosives, qui présente au moins une ouverture refermable de remplissage et/ou de vidange, étanche aux gaz et aux liquides et disposée dans le panneau supérieur ou le couvercle du récipient, le récipient étant doté d'une couche extérieure durablement non électrostatiquement chargeable ou, respectivement, électrostatiquement dissipative,
**caractérisé en ce que**
la couche extérieure durablement non électrostatiquement chargeable ou, respectivement, électrostatiquement dissipative contient un composé antistatique incorporé en tant que matière plastique polyamide-polyamide éther-blocamide avec une quantité ajoutée de 10 % à 20 % dans la matière synthétique de base de la couche extérieure,
et **en ce que** l'épaisseur de la couche extérieure, avec une épaisseur comprise entre 0,05 mm et 0,5 mm, est suffisamment mince pour ne pas compromettre la transparence ou la translucidité de la couche extérieure composite, de telle sorte que le niveau de remplissage du récipient par un liquide reste détectable visuellement sans problème,
la matière synthétique de la mince couche extérieure étant constituée d'un matériau (polymère) thermoplastique bien étirable, comme un matériau à base de LLDPE ("Linear Low Density Polyethylen" - polyéthylène linéaire à basse densité) ou un matériau à base de LDPE ("Low Density Polyethylen" - polyéthylène à basse densité), la matière synthétique de la ou des couches centrales et/ou de la ou des couches intérieures du récipient en plusieurs couches étant constituée d'un matériau à base de HDPE ("High Density Polyethylen" - polyéthylène à haute densité) à haut poids moléculaire et résistant aux chocs à froid et l'épaisseur de la couche centrale est de 1 mm à 2 mm et l'épaisseur de la couche interne est de 0,5 mm.

2. Conteneur à palette selon la revendication 1, **caractérisé en ce que** la matière synthétique de la couche extérieure antistatique contient une quantité limitée de pigments colorés qui a pour effet une légère coloration de la matière synthétique de la couche extérieure qui rend visuellement visible la répartition de la mince couche extérieure sur la surface et la répartition de son épaisseur.

3. Conteneur à palette selon les revendications 1 ou 2, **caractérisé en ce que** la matière synthétique de la couche antistatique extérieure contient une quantité limitée d'éclaircissants optiques qui, dans des condition normales, a pour effet une coloration presque indétectable de
la matière synthétique, mais qui sous éclairage spécial, par exemple en lumière noire, rend visible la répartition de la mince couche extérieure à la surface et la répartition de son épaisseur.

4. Conteneur à palette selon les revendications 1, 2 ou 3, **caractérisé en ce que** l'épaisseur de la couche extérieure antistatique représente de 0,25 % à 5 % et de préférence environ 2 % de l'épaisseur de la paroi du récipient en matière synthétique.

5. Conteneur à palette selon les revendications 1, 2, 3 ou 4, **caractérisé en ce que** la couche extérieure antistatique d'un récipient intérieur en matière synthétique de grand volume d'un conteneur à palette d'une capacité d'environ 1 000 litres a une épaisseur comprise entre environ 0,05 mm et 0,2 mm et de préférence d'environ 0,1 mm.

6. Conteneur à palette selon les revendications 1, 2, 3, 4 ou 5, **caractérisé par** une configuration comme récipient intérieur (12) de forme parallélépipédique et à parois minces d'un conteneur à palette (10), doté d'une tubulure de remplissage dans son panneau supérieur et d'une tubulure latérale inférieure de vidange, sur laquelle un robinet de soutirage (18) constitué d'une matière synthétique durablement antistatique ou, respectivement, électriquement dissipative est fixé.

7. Procédé de moulage-soufflage pour la fabrication d'un récipient de forme parallélépipédique multicouche en matière thermoplastique destiné à être utilisé dans un conteneur à palette doté d'une palette de fond et d'une grille d'encadrement qui entoure le récipient, pour l'entreposage et le transport de marchandises liquides et en particulier de marchandises combustibles ou explosives,
le récipient étant doté d'une couche durablement non électrostatiquement chargeable ou, respectivement, électrostatiquement dissipative,
**caractérisé en ce que**
les propriétés durablement non électrostatiquement chargeables ou, respectivement, électrostatiquement dissipatives de la couche extérieure sont ajustées par addition et incorporation d'une quantité limitée d'un composé antistatique à base de polymère en tant que matière plastique polyamide-polyamide-éterblocamide avec une quantité ajoutée de 10 % à 20 % dans la matière synthétique de base de la couche extérieure, et
**en ce que** l'épaisseur de la couche extérieure est suffisamment mince entre 0,05 mm et 0,5 mm pour que la transparence ou la translucidité de la couche extérieure composite ne soient pas compromises ou le soient suffisamment peu pour que le niveau de remplissage du récipient par un liquide reste détectable visuellement sans problème,
**en ce que** la matière synthétique de la mince couche extérieure est constituée d'un matériau (polymère) thermoplastique bien étirable, par exemple un matériau à base de LLDPE ("Linear Low Density Polyethylen" - polyéthylène linéaire à basse densité) ou un matériau à base de LDPE ("Low Density Polyethylen" - polyéthylène à basse densité) et
**en ce que** la matière synthétique de la ou des couches centrales et/ou de la ou des couches intérieures du récipient en plusieurs couches est constituée d'un matériau à base de HDPE ("High Density Polyethylen" - polyéthylène à haute densité) à haut poids moléculaire et résistant aux chocs à froid et l'épaisseur de la couche centrale est de 1 mm à 2 mm et l'épaisseur de la couche interne est de 0,5 mm.

8. Procédé de moulage-soufflage selon la revendication 7, **caractérisé en ce qu'**une quantité limitée de pigments colorés est ajoutée et incorporée dans la matière synthétique de la couche extérieure et a pour effet une légère coloration de la matière synthétique de la couche extérieure qui permet de rendre visible et d'évaluer la répartition de la mince couche extérieure à la surface et la répartition de son épaisseur tout en dégradant suffisamment peu la translucidité de la couche extérieure composite et faiblement pigmentée pour que le niveau de remplissage du récipient par un liquide reste bien détectable visuellement.

9. Procédé de moulage-soufflage selon les revendications 7 ou 8, **caractérisé en ce qu'**une quantité limitée d'éclaircissants optiques est ajoutée et incorporée dans la matière synthétique de la couche extérieure et, dans des conditions normales, a pour effet une coloration presque indétectable de la matière synthétique, mais sous éclairage spécial, par exemple en lumière noire, rend visible la répartition de la mince couche extérieure à la surface et la répartition de son épaisseur.

10. Procédé de moulage-soufflage selon les revendications 7, 8 ou 9, **caractérisé en ce que** l'épaisseur de la couche extérieure du récipient en matière synthétique est réglée à 0,25 % - 5 % et de préférence à environ 2,0 % de l'épaisseur de la paroi du récipient en matière synthétique.

11. Procédé de moulage-soufflage selon les revendications 7, 8, 9 ou 10, **caractérisé en ce que** la couche extérieure d'un récipient intérieur en matière synthétique de grand volume d'un conteneur à palette d'une capacité d'environ 1 000 litres, lorsque l'épaisseur moyenne de la paroi est comprise entre 2 mm et 2,5 mm, est réglée à une épaisseur de couche comprise entre 0,05 mm et 0,2 mm et de préférence d'environ 0,1 mm.
